# EUROPEAN PATENT SPECIFICATION

(11) **EP 4 138 196 B1**
(45) Date of publication and mention of the grant of the patent: **16.09.2026**
(21) Application number: 22759995.8
(22) Date of filing: 21.02.2022
(51) Int. Cl.: H01M 50/342, H01M 50/30, H01M 50/204

(54) **GAS VENTING DEVICE AND BATTERY MODULE AND BATTERY PACK COMPRISING THE SAME**
GASABLEITVORRICHTUNG SOWIE BATTERIEMODUL UND BATTERIEPACK, DIE DIESE ENTHALTEN
DISPOSITIF D'ÉVACUATION DES GAZ, MODULE DE BATTERIE ET BLOC DE BATTERIES LE COMPRENANT

(30) Priority: 23.02.2021 KR 20210024304; 18.02.2022 KR 20220021766
(43) Date of publication of application: 22.02.2023
(60) Divisional application: 26158832.1 / 4 726 879
(73) Proprietor: LG Energy Solution, Ltd., Seoul 07335 (KR)
(72) Inventor: KIM, Doo Seung, Daejeon 34122 (KR); CHOO, Yeon Chul, Daejeon 34122 (KR)
(74) Representative: Plasseraud IP
(86) International application number: PCT/KR2022/002497
(87) International publication number: WO 2022/182077

(56) References cited:
- JP-A- 2013 089 375
- JP-A- 2013 187 530
- KR-A- 20150 030 600
- KR-A- 20160 112 768
- KR-A- 20190 028 200
- US-A1- 2005 282 064

## Description

### [Technical Field]

The present invention relates to a gas venting device for discharging gas inside a battery module or battery pack, and a battery pack including the same.

This application claims the benefit of priority based on Korean Patent Application No. 10-2021-0024304, filed on February 23, 2021 and Korean Patent Application No. 10-2022-0021766, filed on February 18, 2022.

### [Background Art]

Battery packs applied to electric vehicles and the like have a structure in which a plurality of battery modules including a plurality of secondary batteries are connected in series or in parallel to obtain high output. In addition, the secondary batteries can be repeatedly charged and discharged by an electrochemical reaction between components including positive and negative current collectors, separators, active materials, electrolytes, and the like.

A secondary battery may generate gas from the inside thereof at any time while repeatedly charged and discharged, and the generated gas is called venting gas. For example, when an overcurrent flows, a temperature of the secondary battery inside the battery pack is rapidly increased. Such a rapid increase in temperature may cause a decomposition reaction of an electrolyte to generate gas. When the gas is generated from the secondary battery inside the battery pack, the gas may be collected inside the pack and the battery pack may explode, or the gas may be introduced into the interior of a vehicle or the like through a cooling duct of the battery pack or the like. Accordingly, a venting device capable of reducing the pressure in a battery pack by discharging gas inside the battery pack to the outside is provided in the battery pack.

Generally, a venting device has a structure in which a venting disc that can rupture according to internal pressure is inserted between an inlet through which gas inside a battery pack is introduced and an outlet through which the gas is discharged. However, since the conventional venting device has a simple cylindrical structure in which an inlet and outlet of gas are connected, the pressure between the inlet and the outlet is not large, and thus there is a limit to the flow rate of the gas that can be discharged.

### [Documents of Related Art]

### [Patent Documents]

Korean Laid-open Patent Application No. 10-2018-0039986
KR 2016 0112768, JP 2013 187530, KR 2019 0028200, KR 2015 0030600 and US 2005/282064 are also known.

### [Disclosure]

### [Technical Problem]

An object of the present invention is to provide a gas venting device capable of discharging a larger flow amount per hour even with a venting disc having the same area, and a battery module and battery pack including the same.

### [Technical Solution]

The present invention is defined in the appended claims.

### [Advantageous Effects]

According to a gas venting device according to the present invention and a battery module or battery pack including the same, a larger flow amount can be discharged per hour even when a venting disc having the same area is used, and thus the safety of the battery module and battery pack can be improved.

### [Brief Description of the Drawings]

FIG. 1 is a perspective view of a gas venting device according to an embodiment of the present invention.
FIG. 2 is a perspective view illustrating a form in which brackets and a venting disc are fastened in a gas venting device according to an embodiment of the present invention.
FIG. 3 is a cross-sectional view illustrating a shape of a gas venting device according to an embodiment of the present invention.
FIG. 4 is a schematic view illustrating a shape of a discharge guide member.
FIG. 5 illustrates cross-sectional views illustrating a shape of a gas venting device according to another embodiment of the present invention.
FIG. 6 illustrates cross-sectional views illustrating a shape of a gas venting device according to still another embodiment of the present invention.
FIG. 7 illustrates cross-sectional views illustrating a shape of a gas venting device according to another embodiment of the present invention.
FIG. 8 illustrates cross-sectional views illustrating a shape of a gas venting device according to still another embodiment of the present invention.
FIG. 9 is a cross-sectional view illustrating a form in which brackets and a discharge guide member are fastened according to an embodiment of the present invention.
FIG. 10 is a cross-sectional view illustrating a form in which brackets and a discharge guide member are fastened according to another embodiment of the present invention.
FIG. 11 is a schematic view illustrating a shape of a venting disc according to the present invention.
FIG. 12 is a schematic views illustrating a coupling structure of a gas venting device in a battery module according to an embodiment of the present invention.
FIG. 13 is a schematic view illustrating a coupling structure of a gas venting device in a battery module according to another embodiment of the present invention.

### [Detailed Description of the Preferred Embodiments]

Hereinafter, the present invention will be described in detail with reference to the accompanying drawings.

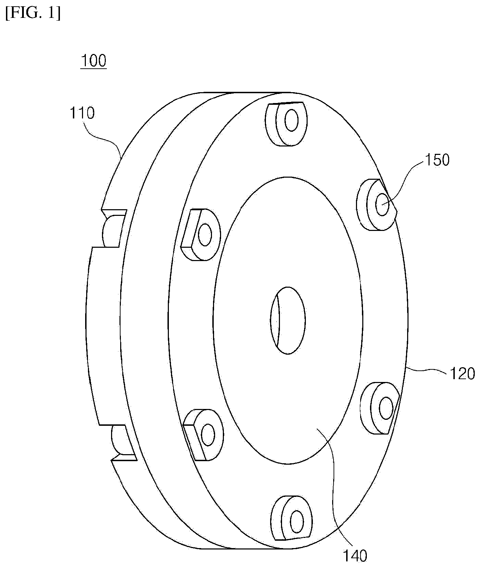

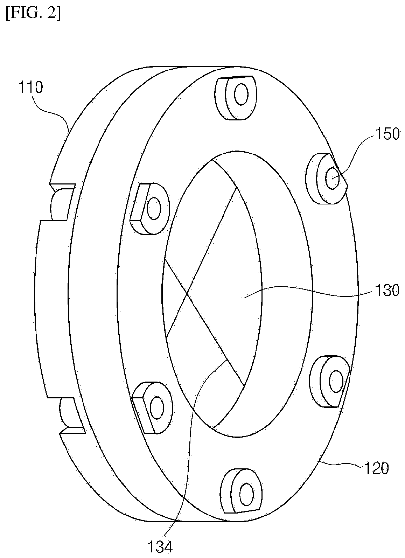

FIG. 1 is a perspective view of a gas venting device according to an embodiment of the present invention, and FIG. 2 is a perspective view illustrating a form in which brackets and a venting disc are fastened in the gas venting device according to the embodiment of the present invention.

Referring to FIGS. 1 and 2, a gas venting device 100 according to the present invention includes a first bracket 110 having a through hole formed in a central portion thereof, a second bracket 120 in which a through hole communicating with the first bracket 110 is formed in a central portion thereof and which is fastened to the first bracket 110, and a venting disc 130 fastened between the first bracket 110 and the second bracket 120 to shield the through holes and configured to rupture when a predetermined pressure is applied, wherein a gas discharge flow path is formed in the through holes formed in the first bracket 110 and the second bracket 120, and a cross-sectional area of the gas discharge flow path is continuously or gradually reduced in a gas discharge direction.

Generally, a plurality of battery modules are mounted in a battery pack, and a plurality of secondary batteries are embedded in each battery module. The secondary batteries generate gas due to a decomposition reaction of an electrolyte or the like as the secondary batteries are repeatedly charged and discharged. Heat generated during the charging and discharging process of the batteries promotes gas generation and expands the gas, thereby increasing the pressure inside the battery module or battery pack. When such a process continues, the battery module or the battery pack may explode or the gas inside the battery module or battery pack may be introduced into the interior of a vehicle through a duct or the like. Therefore, a venting device, in which a venting disc ruptures to discharge gas when the pressure of the gas is a predetermined value or higher, is attached.

Such gas is generally a compressible fluid whose volume changes with respect to pressure. When air flows at a high speed, pressure and density are increased in some regions, and a volume of the air is reduced. However, in the process of discharging the gas as described above, a discharging rate of the gas is small, and thus an incompressible flow phenomenon in which a change in volume according to pressure is negligible occurs. In the incompressible flow, a total pressure on a fluid is constant, and the pressure and flow rate of the fluid are inversely proportional. That is, when the pressure of the fluid increases, a flow rate decreases, and when the pressure of the fluid decreases, the flow rate increases.

As described above, since the conventional venting device has a simple cylindrical structure in which an inlet and outlet of gas are connected, the pressure between the inlet and the outlet is not large, and thus there is a limit to the flow rate of the gas that can be discharged.

In contrast, when the cross-sectional area of the gas discharge flow path is continuously or gradually reduced in the gas discharge direction as in the present invention, as the flow rate of air decreases at the inlet having a large cross-sectional area, the internal pressure increases, and as the flow rate of air increases at the outlet having a small cross-sectional area, the internal pressure decreases. Accordingly, a difference in pressure between the inlet and the outlet is further increased locally, and a larger amount of gas can be discharged even when a venting disc having the same area is used. Therefore, when the internal pressure due to the gas generated inside the battery module or battery pack exceeds a reference value, the safety of the battery module and battery pack can be improved by rapidly discharging the gas.

Hereinafter, a structure of the gas venting device according to the present invention will be described in detail.

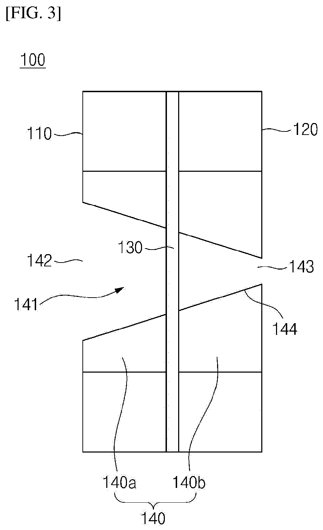

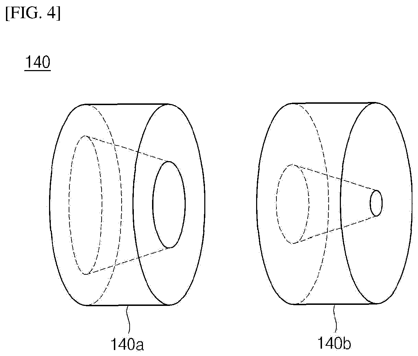

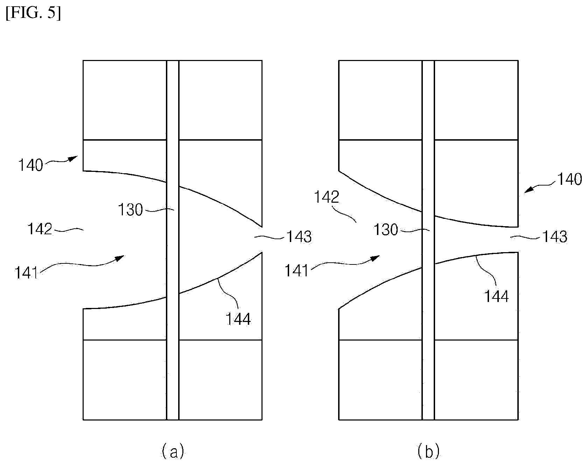

FIG. 3 is a cross-sectional view illustrating a shape of the gas venting device and FIG. 4 is a schematic view illustrating a shape of a discharge guide member. FIG. 5 illustrates cross-sectional views illustrating a shape of a gas venting device according to another embodiment of the present invention.

Referring to FIG. 3 or 4 together with FIGS. 1 and 2, the gas venting device 100 includes brackets 110 and 120 for fastening a venting disc 130 and discharging gas therein. The venting disc 130 may be fastened between the two brackets 110 and 120, and through holes are each formed in one of central portions of the brackets 110 and 120 to form a gas discharge flow path in the through holes. Among the two brackets 110 and 120, a bracket positioned at a side through which gas is introduced relative to a gas discharge direction is defined as a first bracket 110, and a bracket positioned at a side through which the gas is discharged is defined as a second bracket 120. The through hole formed in the central portion of the second bracket 120 communicates with the through hole formed in the central portion of the first bracket 110 to act as a gas discharge flow path. The venting disc and a discharge guide member, which will be described below, are both fastened to the first bracket 110 and the second bracket 120, and fastening holes (not illustrated) into which bolts 150 for fastening the gas venting device 100 to the battery module or the battery pack may be inserted may be formed.

The venting disc 130 is fastened between the first bracket 110 and the second bracket 120 to shield the through holes and may be configured to rupture when a predetermined pressure is applied.

Meanwhile, the gas discharge flow path is formed in the through holes formed in the first bracket 110 and the second bracket 120. Specifically, the gas venting device 100 includes a discharge guide member 140 which is inserted into the through holes of the first bracket 110 and the second bracket 120 and has a gas discharge flow path 141 formed in a central portion thereof. The gas discharge flow path formed in the through holes may be formed by the discharge guide member 140, and in this case, a cross-sectional area of the gas discharge flow path 141 formed in the discharge guide member 140 is continuously or gradually reduced in the gas discharge direction.

That is, the shape of the gas discharge flow path formed in the brackets 110 and 120 may be formed by forming the shape of the through hole itself, but it is possible to insert a separate discharge guide member 140 into the brackets 110 and 120 to form the gas discharge flow path as described above. The discharge guide member 140 has a detachable/attachable or replaceable structure. In the present invention, by using a separate discharge guide member 140 for the brackets 110 and 120, the gas can be smoothly discharged, parts can be easily replaced, and the shape of the flow path can be easily changed.

In order to improve the efficiency of gas discharge, the cross-sectional area may be changed while maximizing a length of the gas discharge flow path. Since the venting disc 130 is positioned between the first bracket 110 and the second bracket 120, the discharge guide member 140 may also be inserted into the through holes formed in the first bracket 110 and the second bracket 120. Specifically, the discharge guide member 140 includes a first discharge guide member 140a inserted into the through hole formed in the first bracket 110 and a second discharge guide member 140b inserted into the through hole formed in the second bracket 120. Here, the cross-sectional area of the gas discharge flow path 141 formed by the first discharge guide member 140a and the second discharge guide member 140b is continuously or gradually reduced in the gas discharge direction. That is, there is no step difference between the first discharge guide member 141a and the second discharge guide member 140b, and the gas discharge flow path 141 is formed with one continuous surface. Accordingly, movement of the gas introduced into the brackets 110 and 120 may not be hindered and the gas can be smoothly discharged.

Further, the gas discharge flow path 141 formed by the discharge guide member 140 may be designed, for example, to have a circular shape, as illustrated in FIG. 4. In this case, the gas discharge flow path 141 formed by the discharge guide member 140 may have a truncated conical shape. Referring to FIGS. 3 and 4 together, an inlet 142 and an outlet 143 of the gas discharge flow path 141 in the discharge guide member 140 each have a circular shape, and have lower and upper surfaces forming a truncated conical shape. That is, an inner wall 144 of the discharge guide member 140 has a structure in which a cross-sectional area is continuously reduced from the inlet through which the gas is introduced toward the outlet through which the gas is discharged so as to form an inclined surface. When a cross-sectional profile of the inner wall 144 of the gas discharge flow path 141 is formed as a straight inclined surface as illustrated in FIGS. 3 and 4, a reduction rate of the cross-sectional area is constant throughout the gas discharge flow path.

Such a straight cross-sectional profile is simple, and thus it is easy to manufacture the cross-sectional profile, but when the cross-sectional profile is connected to other parts such as a pipe and the like, an angular portion may be formed on the wall of the flow path, and thus some sections in which the flow is unstable may be generated. Further, since the reduction rate of the cross-sectional area is constant, for example, when a gas whose flow is unstable is introduced from the inlet of the flow path, flow instability of the gas cannot be resolved and is highly likely to be maintained up to the outlet of the flow path. That is, the flow path having a constant reduction rate in cross-sectional area has a disadvantage in that a degree of freedom to adjust flow instability within the corresponding flow path is reduced.

On the other hand, when the reduction rate of the cross-sectional area is changed along the flow path, there is an advantage in that the above-described flow instability may be adjusted and managed within the flow path. FIGS. 5 to 8 illustrate embodiments of the gas discharge flow path according to the present invention.

Referring to FIG. 5A, the gas discharge flow path 141 formed by the discharge guide member 140 has a truncated conical shape in which an inclined surface, formed on the inner wall 144 of the gas discharge flow path is concavely curved, as the cross-sectional area thereof is continuously reduced toward the outlet 143.

Here, the shape in which the inclined surface is concavely curved refers to a shape in which the inclined surface is recessed toward the outside of the gas discharge flow path in a vertical cross section of the flow path. In this case, a reduction rate of the cross-sectional area is small near the inlet 142 through which the gas is introduced, and is increased toward the outlet 143 through which the gas is discharged. Since the gas discharge flow path 141 having the cross-sectional profile of the concave curved shape as described above has a shape in which the cross-sectional area of the flow path on the outlet 143 side is rapidly reduced, a difference in pressure (differential pressure) between the inlet 142 and the outlet 143 of the flow path may be increased. That is, as compared to the gas discharge flow path 141 of the embodiment of FIGS. 3 and 4 having the straight inclined surface, the flow path of the present embodiment may achieve a greater differential pressure between the inlet and the outlet. This means that even when a length of the flow path is shortened, a desired differential pressure may be easily obtained. Therefore, according to the present embodiment, when the same differential pressure as the gas discharge flow path 141 having the straight inclined surface of FIGS. 3 and 4 is achieved, the gas venting device may be configured with a flow path having a shorter length than that of the embodiment of FIGS. 3 and 4.

Further, referring to FIG. 5B, the gas discharge flow path 141 formed by the discharge guide member 140 has a truncated conical shape in which an inclined surface formed on the inner wall 144 is convexly curved, as the cross-sectional area thereof is continuously reduced toward the outlet 143.

Here, the shape in which the inclined surface is convexly curved refers to a shape in which the inclined surface protrudes toward the center of the flow path in a vertical cross section of the flow path. In this case, a reduction rate of the cross-sectional area is large near the inlet 142 through which the gas is introduced, and is reduced toward the outlet 143 through which the gas is discharged. The gas discharge flow path 141 having the cross-sectional profile of the convex curved shape of FIG. 5B also has a cross-sectional area reduction rate, which is greater than that of the gas discharge flow path having the straight inclined surface, similar to the flow path of FIG. 5A. Therefore, since a greater differential pressure may be achieved between the inlet and the outlet, the gas venting device may be configured with a shorter length of the flow path. In particular, in the gas discharge flow path 141 of FIG. 5B, the flow path on the outlet 143 side has a shape in which the cross-sectional area is relatively gently reduced as compared to the flow path of the straight inclined surface. The flow path having such a shape has an advantage of achieving high flow stability because a change in physical quantity inside the flow path is gentle.

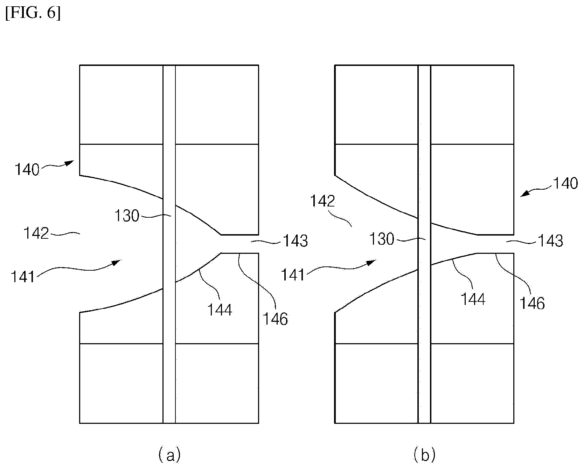

Meanwhile, as described above, in order to achieve both effects of increasing the difference in pressure between the inlet and the outlet and increasing flow stability, the cross-sectional profile of the gas discharge flow path 141 may be configured in a form in which a curve and a straight line are combined as illustrated in FIG. 6.

Referring to FIG. 6A, a straight flow path 146 having a constant cross-sectional area is formed on the side of the outlet 143 of a gas discharge flow path 141, which follows a truncated conical-shaped flow path in which an inclined surface of the gas discharge flow path 141 is concave. In the present embodiment, in the concave truncated conical-shaped flow path of the gas discharge flow path 141, a larger pressure difference may be achieved due to a reduction in cross-sectional area, and in the straight flow path 146 on the outlet side, the discharge gas may be stably discharged by designing a slope of an inner wall to be parallel to the gas flow direction.

Referring to FIG. 6B, a straight flow path 146 having a constant cross-sectional area is formed on the side of the outlet 143 of the gas discharge flow path, which follows the truncated conical-shaped flow path in which the inclined surface of the gas discharge flow path 141 is convex. As above, in the present embodiment, in the convex truncated conical-shaped flow path of the gas discharge flow path 141, a larger pressure difference may also be achieved due to a reduction in cross-sectional area, and in the straight flow path 146 on the outlet side, the discharge gas may be stably discharged by designing a slope of an inner wall to be parallel to the gas flow direction.

In particular, the gas venting device 100 having the discharge guide member 140 of the embodiment of FIG. 6 has a structure in which the gas is finally discharged through the flow path parallel to the gas flow direction while a curvature or cross-sectional area of the gas discharge flow path 141 is continuously reduced. Therefore, even when the flow of the gas introduced into the inlet 142 of the flow path is initially unstable, the flow instability of the gas may be resolved while the gas passes through the corresponding flow path, and thus the gas may stably flow at the outlet 143.

In the embodiment of FIG. 6, the gas discharge flow path 141 formed on the inner wall of the first discharge guide member 140a inserted into the through hole formed in the first bracket 110 may have the inclined surface having the concave truncated conical shape of (see FIG. 6A) or the inclined surface having the convex truncated conical shape of (see FIG. 6B). Meanwhile, the gas discharge flow path 141 formed on the inner wall of the second discharge guide member 140bmay have a complex type flow path including both of the concave or convex truncated conical-shaped inclined surface and the straight flow path 146 connected thereto.

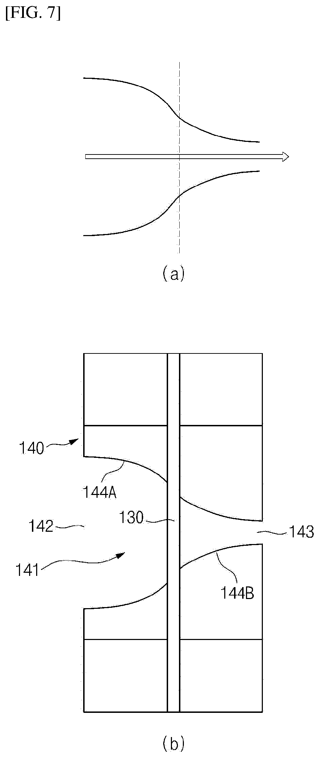

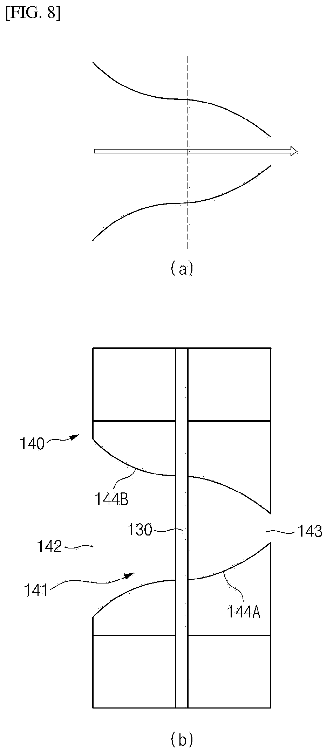

Further, in order to achieve both effects of increasing the difference in pressure between the inlet and the outlet and increasing flow stability, the gas discharge flow path 141 may be configured in a form in which curves having different curvatures are combined, as illustrated in FIGS. 7 and 8.

In FIG. 7A, a schematic cross-sectional profile of a complex flow path is illustrated in which a gas discharge flow path having a continuously reduced overall cross-sectional area is formed, and a truncated conical-shaped flow path 144A, in which an inclined surface is concave, and a truncated conical-shaped flow path 144B, in which an inclined surface is convex, are consecutively formed. In FIG. 7B, a gas venting device 100 having the cross-sectional profile of the complex flow path is disclosed.

The flow path of FIG. 7 is basically the same as the above-described embodiment in that the cross-sectional area is continuously reduced from the inlet 142 toward the outlet 143 of the gas discharge flow path 141. Therefore, as compared to the conventional gas venting device in which the cross-sectional area is not reduced, a difference in pressure between the inlet and the outlet is increased locally, and thus a larger amount of gas can be discharged even when a venting disc having the same area is used.

In addition to the above effects, since the gas discharge flow path 141 of FIG. 7 has the concave inclined surface and the convex inclined surface which are consecutively formed, a reduction rate of the cross-sectional area may be further increased, and thus the difference in pressure between the inlet and the outlet may be further increased based on the same flow path. Accordingly, it is possible to further increase the discharge flow rate of the gas. Further, since the outlet 143 has a flow path having a convex inclined surface with a relatively gentle curve, it is possible to improve the flow stability of the gas.

A dotted line of FIG. 7A indicates a boundary line at which the shape of the inclined surface is changed, and the boundary line may become a boundary between the first bracket 110 and the second bracket 120, or become a portion in which the venting disc 130 is installed, as illustrated in FIG. 7B. However, a position of the boundary line is not limited thereto, and for example, one bracket of the first bracket 110 and the second bracket 120 may have a flow path having an inclined surface including a boundary line, and the other bracket may have a flow path having an inclined surface of a single curvature. That is, although not illustrated, it is also possible to form a gas discharge flow path in such a way that one of the two brackets includes all of the flow path portions with varying curvatures.

In FIG. 8A, a schematic cross-sectional profile of a complex flow path is illustrated in which a gas discharge flow path 141 having an overall continuously reduced cross-sectional area is formed, and a truncated conical-shaped flow path 144B in which an inclined surface is convex, and a concave truncated conical-shaped flow path 144A in which an inclined surface is concave, are consecutively formed. In FIG. 8B, a gas venting device having the cross-sectional profile of the complex flow path is disclosed. That is, the gas venting device of FIG. 8 includes a gas discharge flow path with an arrangement opposite to that of FIG. 7.

Since the cross-sectional area of the flow path of FIG. 8 is also continuously reduced from the inlet 142 toward the outlet 143 of the gas discharge flow path, a difference in pressure between the inlet and the outlet is increased locally, and thus a larger amount of gas can be discharged even when a venting disc having the same area is used.

Further, since the gas discharge flow path 141 of FIG. 8 has the convex inclined surface and the concave inclined surface which are consecutively formed, a reduction rate of the cross-sectional area may be increased, and thus the difference in pressure between the inlet and the outlet may be further increased based on the same flow path. Accordingly, it is possible to further increase the discharge flow rate of the gas. Further, since the gas discharge flow path 141 has a flow path having an inclined surface with a relatively gentle curve as a whole, it is possible to further improve the flow stability of the gas.

A dotted line of FIG. 8A indicates a boundary line at which the shape of the inclined surface is changed, and the boundary line may become a boundary between the first bracket 110 and the second bracket 120, or become a portion in which the venting disc 130 is installed, as illustrated in FIG. 8B. However, a position of the boundary line is not limited thereto, and for example, one bracket of the first bracket 110 and the second bracket 120 may have a flow path having an inclined surface including a boundary line, and the other bracket may have a flow path having an inclined surface of a single curvature. That is, although not illustrated, it is also possible to form a gas discharge flow path in such a way that one of the two brackets includes all of the flow path portions with varying curvatures.

The venting devices of FIGS. 7 and 8 include a complex flow path having inclined surfaces with different curvatures. Therefore, for example, even when the flow stability of the gas is initially reduced, the flow stability of the gas can be improved at the outlet according to a curvature while the gas passes through the flow path. At the same time, the difference in pressure between the inlet 142 and the outlet 143 may be increased by varying the curvature of the flow path. The complex flow path of FIG. 7 may be an example in which a pressure difference and flow stability are considered in good balance, whereas the complex flow path of FIG. 8 may be an example in which flow stability is further considered. In any case, since the flow of the gas may be adjusted in the corresponding flow path, there is an advantage in that the degree of freedom for adjusting flow instability is excellent.

In addition to the above, in the discharge guide member, the shape of the flow path formed therein may be designed in various forms according to safety standards of battery packs.

Further, the cross-sectional area of the outlet 143 of the gas discharge flow path 141 may be appropriately selected according to structures of the battery module and a battery pack or safety conditions to be achieved, but may range from 40% to 80% of the cross-sectional area of the inlet 142. Specifically, the cross-sectional area of the outlet may range from 50 to 70% of the cross-sectional area of the inlet, and more specifically, may range from 55 to 65%. When the cross-sectional area of the outlet is less than 40% of the cross-sectional area of the inlet, the outlet is too narrow. On the other hand, when the cross-sectional area of the outlet exceeds 80% of the cross-sectional area of the inlet, a difference in cross-sectional area between the inlet and the outlet is excessively reduced and a pressure difference between the inlet and the outlet is reduced, and thus the efficiency of gas venting is reduced.

Further, a pattern (not illustrated) for assisting gas discharge may be formed on the inner wall 144 of the gas discharge flow path 141. For example, the pattern may have a shape of a protrusion having a screw thread, an embossing, or a straight-line shaped pattern parallel to the gas discharge direction. Specifically, the pattern may be formed in the form of a screw thread protrusion surrounding the inside of the flow path along the inner wall of the flow path. Such a pattern may promote the discharge of the gas.

Meanwhile, since the discharge guide member is fastened to the brackets, stable gas discharge may be promoted even during gas venting.

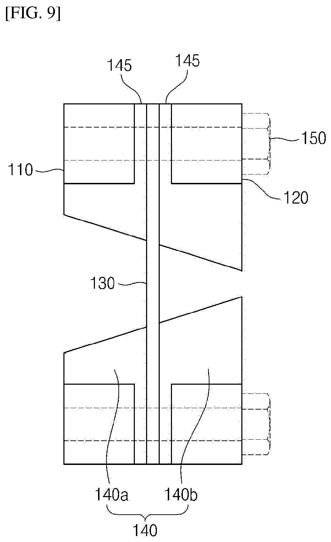

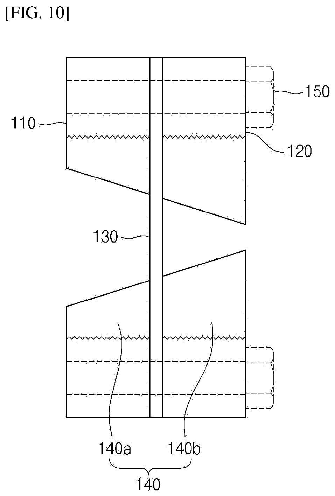

FIG. 9 is a cross-sectional view illustrating a form in which brackets and a discharge guide member are fastened according to an embodiment of the present invention, and FIG. 10 is a cross-sectional view illustrating a form in which brackets and a discharge guide member are fastened according to another embodiment of the present invention.

In an example, brackets 110 and 120 and a discharge guide member 140 may be fastened by bolt fastening. In this case, as illustrated in FIG. 9, fastening portions 145 for fastening the discharge guide member 140 to the brackets 110 and 120 protrude from an outer surface of the discharge guide member 140. Since the discharge guide member 140 should be inserted into the through holes in the brackets 110 and 120, a cross section of the discharge guide member 140 has a shape corresponding to a shape of the through hole, and the fastening portions 145 have a plate-like protrusion shape that protrudes along an outer periphery thereof in a shape similar to an outer periphery of the venting disc 130. In the present invention, the discharge guide member 140 includes a first discharge guide member 140a and a second discharge guide member 140b, and the fastening portions 145 may be formed in both of the first discharge guide member 140a and the second discharge guide member 140b. Fastening holes (not illustrated) for bolt fastening with the brackets 110 and 120 are formed in the fastening portions 145, and the fastening holes formed in the fastening portions 145 are formed at the same positions as the fastening holes formed in the brackets 110 and 120, and are fixed by bolt insertion.

Meanwhile, positions at which the fastening portions 145 are formed may be appropriately designed. For example, as illustrated in FIG. 9, the fastening portions 145 formed in the first discharge guide member 140a and the second discharge guide member 140b may be formed to be disposed between the first bracket 110 and the venting disc 130 and between the second bracket 120 and the venting disc 130, respectively. However, the positions of the fastening portions are not limited thereto, and for example, the fastening portions 145 may be formed so that the brackets 110 and 120 are in contact with a surface opposite to a surface in contact with the venting disc 130.

In another example, the first bracket 110 and the second bracket 120 may be fastened to the discharge guide member 140 in a screw fastening manner. In this case, as illustrated in FIG. 10, screw threads for screw fastening may be formed on the inner walls of the first bracket 110 and the second bracket 120 and on the outer surface of the discharge guide member 140, and accordingly, the first and second brackets 110 and 120 may be fastened to the discharge guide member 140 in the same way as a nut and a bolt are fastened. In the present invention, the discharge guide member 140 includes the first discharge guide member 140a and the second discharge guide member 140b, and the screw threads may be formed on both of the first discharge guide member 140a and the second discharge guide member 140b. In this way, when the discharge guide member 140 is fastened to the brackets 110 and 120 in a screw fastening manner, the insertion of a separate bolt is not required, and thus a structure and fastening method of parts may be simplified and the discharge guide member 140 may be firmly fixed to the brackets 110 and 120.

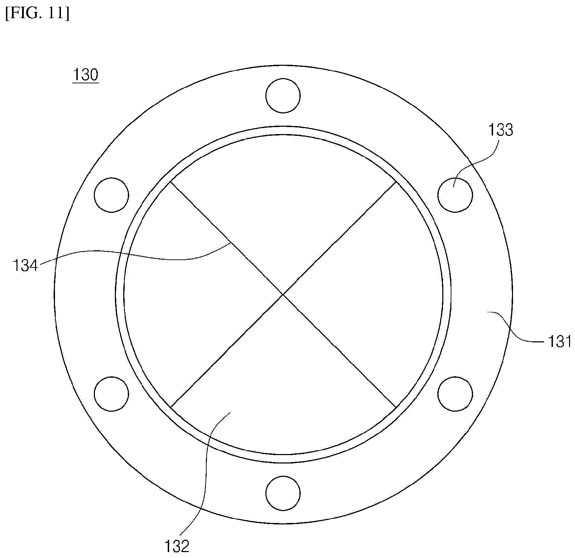

Meanwhile, referring to FIG. 11, the venting disc 130 includes a disc outer peripheral portion 131 which is fastened to the first bracket 110 and the second bracket 120, and a disc inner peripheral portion 132 which is integrally formed with the disc outer peripheral portion 131 as one body, shields the through holes, and ruptures when a predetermined pressure is applied.

The disc outer peripheral portion 131 is a portion for fixing the brackets 110 and 120 and the venting disc 130, and has one surface in contact with the first bracket 110 and the other surface in contact with the second bracket 120. The disc outer peripheral portion 131 may include bolt through holes 133 in a circumferential direction, and the first bracket 110, the disc outer peripheral portion 131, and the second bracket 120 may be integrally coupled through a bolt fastening method. When the discharge guide member has a structure in which the fastening portion is formed, the discharge guide member may be coupled to the brackets and the venting disc.

The disc inner peripheral portion 132 is made of a metal or plastic material that can rupture when a predetermined pressure is applied. For example, the disc inner peripheral portion 132 may be formed of a thin metal or plastic material such as copper, aluminum, or stainless steel. The disc inner peripheral portion 132 may be appropriately selected according to pressure conditions at the time of rupture, and the scope of the present invention is not limited thereto.

The disc inner peripheral portion 132 prevents moisture or foreign substances from penetrating into the battery module or the battery pack by blocking the through holes formed in the first bracket 110 and the second bracket 120 under normal conditions. However, when a large amount of gas is generated from the battery module or the battery pack, the pressure inside the battery module or the battery pack is increased, and the pressure acts as a force to rupture the disc inner peripheral portion 132. In this case, since the pressure inside the battery module or the battery pack is higher than an atmosphere pressure outside, the gas inside the battery module or the battery pack may be discharged to the outside of the battery module or the battery pack due to a negative pressure.

A notch 134 is formed in the disc inner peripheral portion 132 so as to rupture when a predetermined pressure is applied. The notch 134 is formed by being partially cut out from a surface of the venting disc 130 in a thickness direction thereof. The notch 134 may be designed to have a shape such as a cross shape, a circular shape, a quadrangular shape, a U shape, an elliptical shape, an arc shape, or the like, and the notch 134 may have a cross section having a shape such as a trapezoidal shape, a V shape, a quadrangular shape, an arc shape, or the like. The shape of the notch 134 formed in the disc inner peripheral portion 132 is not necessarily limited thereto, and the notch 134 may have one of various shapes. For example, the notch 134 may have an X-shape as illustrated in FIG. 2. In this case, even when the disc inner peripheral portion 132 ruptures, pieces of the disc inner peripheral portion 132 that has ruptured may be coupled to the disc outer peripheral portion 131 without being completely separated. When the pieces of the disc inner peripheral portion that has ruptured are completely separated from the venting disc and fall off, it is difficult to remove the pieces and it is possible to damage other parts.

Further, a disc pad (not illustrated) may be interposed between the first bracket 110 and the venting disc 130 and/or between the second bracket 120 and the venting disc 130. The disc pad may be provided to have a shape corresponding to the disc outer peripheral portion 131, that is, an annular shape, or a ring shape. The disc pad is provided to increase the airtightness between the first bracket 110 and the venting disc 130 or between the second bracket 120 and the venting disc 130 and prevent damage to the disc outer peripheral portion 131. For example, the disc pad may be formed of a rubber material having elasticity or the like.

Further, the present invention provides a battery module including the gas venting device as de0scribed above.

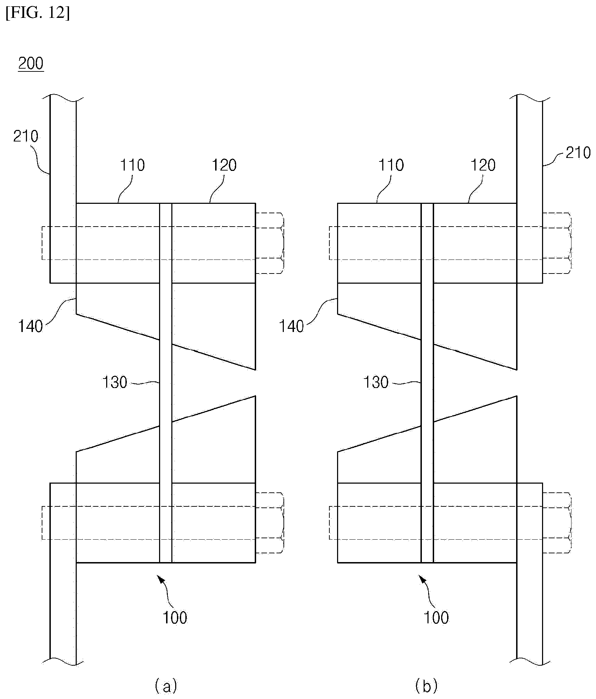

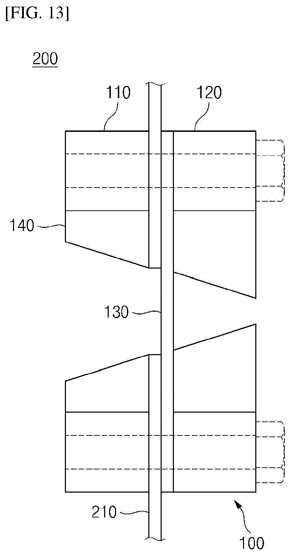

FIG. 12 is a schematic views illustrating a coupling structure of a gas venting device in a battery module according to an embodiment of the present invention, and FIG. 13 is a schematic view illustrating a coupling structure of a gas venting device in a battery module according to another embodiment of the present invention.

Referring to FIGS. 12 and 13, a battery module 200 according to the present invention includes a plurality of secondary batteries (not illustrated), and a module frame 210 on which the secondary batteries are mounted, and has a structure in which the gas venting device 100 as described above is fastened to one side of the module frame 210.

Specifically, the secondary battery has a shape in which an electrode assembly in which a positive electrode, a negative electrode, and a separation film are alternately stacked is mounted in a cell case together with an electrolyte. Since a configuration of the secondary battery is clear to those skilled in the art to which the present invention pertains, a more detailed description thereof will be omitted.

**In** an example, the gas venting device 100 may be fastened to the module frame 210 that is in a state of being in contact with the first bracket 110 or the second bracket 120 as illustrated in FIG. 12. In this case, as illustrated in FIG. 12A, the first bracket 110 is in contact and fastened with an outer surface of the module frame 210, or as illustrated in FIG. 12B, the second bracket 120 is in contact and fastened with an inner surface of the module frame 210. In the specification of the present invention, the inner surface of the module frame 210 refers to a surface facing an inner space in the module frame 210, on which the secondary batteries are mounted, and the outer surface refers to a surface exposed to the outside of the module frame 210. In the module frame 210, holes corresponding to the fastening holes, which are formed in the first bracket 110, the second bracket 120, and the fastening portion (not illustrated) of the discharge guide member 140, and the bolt through holes of the venting disc 130, may be formed, and thus the first bracket 110, the venting disc 130, the discharge guide member 140, and the second bracket 120 may be fixed to the module frame 210 by bolt fastening one time. Furthermore, in the module frame 210, holes having a size corresponding to the through holes, which are formed in the brackets 110 and 120, or the inlet of the gas discharge flow path 141, may be formed, and thus the gas generated in the module may be discharged.

In another example, in the battery module 200, the gas venting device 100 may be fastened to the module frame 210 that is in a state of being interposed between the first bracket 110 and the second bracket 120. Specifically, as illustrated in FIG. 13, the gas venting device 100 may be fastened to the module frame 210 in a state in which the first bracket 110 is in contact with the inner surface of the module frame 210 and the second bracket 120 is in contact with the outer surface of the module frame 210. In this case, a position of the venting disc 130 is not particularly limited, and the venting disc 130 may be interposed between and fastened to the first bracket 110 and the module frame 210 or interposed between and fastened to the second bracket 120 and the module frame 210. When the fastening portion is formed in the discharge guide member, the venting disc is positioned between the fastening portion and the module frame.

Meanwhile, the battery module 200 may further include a sealing member (not illustrated) for sealing a gap between the module frame 210 and an outer periphery of the gas venting device 100. The sealing member may include a rubber ring or a silicone resin, and may be installed in a gap between the gas venting device and the module frame to seal the battery module.

Further, the present invention provides a battery pack including the gas venting device as described above.

The battery pack according to the present invention includes a battery module including a plurality of secondary batteries, and a battery pack case including a tray on which the battery module is mounted and a pack cover that covers the battery module, wherein the gas venting device as described above may be fastened to one side of the battery pack case.

**In** this case, the gas venting device may be fastened to the battery pack case in the same manner as described above.

**In** an example, the gas venting device may be fastened to the battery pack case that is in a state of being in contact with the first bracket. **In** this case, the first bracket may be fastened to the battery pack case that is in a state of being in contact with a surface opposite to a surface in contact with the venting disc. **In** the battery pack case, holes corresponding to the fastening holes, which are formed in the fastening portions of the first bracket, the second bracket, the venting disc, and the discharge guide member, may be formed, and thus the first bracket, the venting disc, the discharge guide member, and the second bracket may be fixed to the battery pack case by bolt fastening one time. Furthermore, in the battery pack case, holes have a size corresponding to the through holes, which are formed in the brackets, may be formed, and thus the holes may serve as a path through which the gas generated in the module is discharged.

**In** another example, the gas venting device may be fastened to the battery pack case that is in a state of being interposed between the first bracket and the second bracket. Specifically, the gas venting device may be fastened to the battery pack case in a state in which the first bracket is in contact with the inner surface of the battery pack case and the second bracket is in contact with the outer surface of the battery pack case. In this case, the position of the venting disc is not particularly limited, and the venting disc may be interposed between and fastened to the first bracket and the battery pack case or interposed between and fastened to the second bracket and the battery pack case. When the fastening portion is formed in the discharge guide member, the venting disc is positioned between the fastening portion and the battery pack case.

Similarly, the battery pack may include a sealing member for sealing a gap between the battery pack case and an outer periphery of the gas venting device. Specifically, the sealing member may include a rubber ring or a silicone resin, and may be installed in a gap between the gas venting device and the battery pack case to seal the battery pack. That is, in a state in which the inside of the battery pack according to the present invention is sealed, when the internal pressure exceeds a reference value, the venting disc may rupture and the gas inside the battery pack may be discharged to the outside, and as the cross-sectional area of the flow path is continuously or gradually reduced in the gas discharge direction, a larger amount of gas can be discharged.

While the present invention has been particularly described with reference to exemplary embodiments, it will be understood by those of skilled in the art that various changes in form and details may be made without departing from the scope of the present invention. Therefore, the embodiments disclosed above and in the accompanying drawings should be considered in a descriptive sense only and not for purposes of limitation. The scope of the present invention is defined not by the detailed description of the present invention but by the appended claims.

### (Reference Numerals)

100: GAS VENTING DEVICE
110: FIRST BRACKET
120: SECOND BRACKET
130: VENTING DISC
131: DISC OUTER PERIPHERAL PORTION
132: DISC INNER PERIPHERAL PORTION
133: BOLT THROUGH HOLE
134: NOTCH
140: DISCHARGE GUIDE MEMBER
141: GAS DISCHARGE FLOW PATH
142: INLET
143: OUTLET
144: INNER WALL
144A: FLOW PATH WITH CONCAVE INCLINED SURFACE
144B: FLOW PATH WITH CONVEX INCLINED SURFACE
146: STRAIGHT FLOW PATH
145: FASTENING PORTION
150: BOLT
200: BATTERY MODULE
210: MODULE FRAME

## Claims

1. A battery module (200) comprising:
a plurality of secondary batteries; and
a module frame (210) on which the secondary batteries are mounted,
wherein a gas venting device (100) is fastened to a first side of the module frame,
wherein the gas venting device (100) comprises:
a first bracket (110) having a first through hole formed in a central portion of the first bracket;
a second bracket (120) in which a second through hole communicating with the first through hole is formed in a central portion of the second bracket (120) and which is fastened to the first bracket (110); and
a venting disc (130) which is fastened between the first bracket (110) and the second bracket (120) to shield the first through hole and the second through hole and is configured to rupture when a predetermined pressure is applied,
wherein a gas discharge flow path is formed in the first through hole and the second through hole, and
wherein a cross-sectional area of the gas discharge flow path is continuously or gradually reduced from the through hole of the first bracket (110) to the through hole of the second bracket (120),
wherein the gas discharge flow path (141) has a truncated conical shape in which an inclined surface formed on an inner wall thereof is concavely or convexly curved.

2. The battery module (200) according to claim 1, wherein the gas venting device (100) further comprises a discharge guide member (140) which is inserted into the through holes of the first bracket (110) and the second bracket (120) and has a gas discharge flow path (141) formed in a central portion of the discharge guide member (140),
wherein a cross-sectional area of the gas discharge flow path (141) is continuously or gradually reduced from the through hole of the first bracket (110) to the through hole of the second bracket (120).

3. The battery module (200) of claim 2, wherein the discharge guide member (140) includes:
a first discharge guide member (140a) inserted into the first through hole formed in the first bracket (110); and
a second discharge guide member (140b) inserted into the second through hole formed in the second bracket (120),
wherein a cross-sectional area of the gas discharge flow path (141) formed by the first discharge guide member (140a) and the second discharge guide member (140b) is continuously or gradually reduced from the through hole of the first bracket (110) to the through hole of the second bracket (120).

4. The battery module (200) of claim 2, wherein the gas discharge flow path (141) has a truncated conical shape in which an inclined surface formed on an inner wall (144) of the gas discharge flow path (141) is concavely or convexly curved, as the cross-sectional area of the gas discharge flow path (141) is continuously reduced.

5. The battery module (200) of claim 4, wherein a straight flow path (146) having a constant cross-sectional area is formed on an outlet side of the gas discharge flow path (141) so as to follow the truncated conical-shaped flow path.

6. The battery module (200) of claim 2, wherein, in the gas discharge flow path (141), a truncated conical-shaped flow path (144A) , in which an inclined surface formed on an inner wall of the gas discharge flow path is concavely curved, and a truncated conical-shaped flow path (144B), in which an inclined surface is convexly curved, are consecutively formed, as the cross-sectional area thereof is continuously reduced.

7. The battery module (200) of claim 2, wherein, in the gas discharge flow path (141), a truncated cone-shaped flow path (144B), in which an inclined surface formed on an inner wall of the gas discharge flow path is convexly curved, and a truncated conical-shaped flow path (144A), in which an inclined surface is concavely curved, are consecutively formed, as the cross-sectional area thereof is continuously reduced.

8. The battery module (200) of claim 2, wherein a protrusion having a screw thread, an embossing, or a straight-line shaped pattern is formed on an inner wall of the gas discharge flow path (141).

9. The battery module (200) of claim 2, wherein:
a fastening portion (145) for fastening the discharge guide member (140) to the first bracket (110) and the second bracket (120) protrudes from an outer surface of the discharge guide member (140), and
a fastening hole for being bolt fastening with the first bracket (110) and the second bracket (120) is formed in the fastening portion (145).

10. The battery module (200) of claim 2, wherein the first bracket (110) and the second bracket (120) are fastened to the discharge guide member (140) in a screw fastening manner.

11. The battery module (200) of claim 1, wherein the venting disc (130) includes:
a disc outer peripheral portion (131) fastened to the first bracket (110) and the second bracket (120); and
a disc inner peripheral portion (132) which is integrally formed with the disc outer peripheral portion (131) as one body, shields the first through hole and the second through hole, and ruptures when the predetermined pressure is applied,
wherein a notch (134) is formed in the disc inner peripheral portion (132) so as to rupture when the predetermined pressure is applied.

12. The battery module (200) of claim 1, wherein the first side is in contact with the first bracket (110) or the second bracket (120).

13. The battery module (200) of claim 1, wherein the first bracket (110) is in contact with an inner surface of the module frame (210) and the second bracket (120) is in contact with an outer surface of the module frame (210).

14. The battery module (200) of claim 1, further comprising a sealing member configured to seal a gap between the module frame (210) and an outer periphery of the gas venting device (100).

## Patentansprüche

1. Batteriemodul (200), umfassend:
eine Vielzahl von Sekundärbatterien; und
einen Modulrahmen (210), auf dem die Sekundärbatterien mon&ert sind,
wobei eine Gasentlü+ungsvorrichtung (100) an einer ersten Seite des Modulrahmens befes&gt ist,
wobei die Gasentlü+ungsvorrichtung (100) umfasst:
eine erste Halterung (110) mit einem ersten Durchgangsloch, das in einem mittleren Abschnitt der ersten Halterung ausgebildet ist;
eine zweite Halterung (120), in der ein mit dem ersten Durchgangsloch in Verbindung stehendes zweites Durchgangsloch in einem mittleren Abschnitt der zweiten Halterung (120) ausgebildet ist und die an der ersten Halterung (110) befes&gt ist; und
eine Entlü+ungsscheibe (130), die zwischen der ersten Halterung (110) und der zweiten Halterung (120) befes&gt ist, um das erste Durchgangsloch und das zweite Durchgangsloch abzuschirmen, und die so ausgelegt ist, dass sie bricht, wenn ein vorbes&mmter Druck angelegt wird,
wobei ein Gasauslassströmungspfad in dem ersten Durchgangsloch und dem zweiten Durchgangsloch ausgebildet ist, und
wobei sich eine Querschnittsfläche des Gasauslassströmungspfades vom Durchgangsloch der ersten Halterung (110) zum Durchgangsloch der zweiten Halterung (120) kon&nuierlich oder allmählich verringert,
wobei der Gasauslassströmungspfad (141) eine kegelstumpfförmige Gestalt aufweist, bei der eine an einer Innenwand davon ausgebildete geneigte Fläche konkav oder konvex gekrümmt ist.

2. Batteriemodul (200) nach Anspruch 1, wobei die Gasentlü+ungsvorrichtung (100) ferner ein Auslassführungselement (140) umfasst, das in die Durchgangslöcher der ersten Halterung (110) und der zweiten Halterung (120) eingesetzt ist und einen Gasauslassströmungspfad (141) aufweist, der in einem mittleren Abschnitt des Auslassführungselements (140) ausgebildet ist,
wobei sich eine Querschnittsfläche des Gasauslassströmungspfades (141) vom Durchgangsloch der ersten Halterung (110) zum Durchgangsloch der zweiten Halterung (120) kon&nuierlich oder allmählich verringert.

3. Batteriemodul (200) nach Anspruch 2, wobei das Auslassführungselement (140) enthält:
ein erstes Auslassführungselement (140a), das in das erste in der ersten Halterung (110) ausgebildete Durchgangsloch eingesetzt ist; und
ein zweites Auslassführungselement (140b), das in das zweite in der zweiten Halterung (120) ausgebildete Durchgangsloch eingesetzt ist,
wobei sich eine Querschnittsfläche des durch das erste Auslassführungselement (140a) und das zweite Auslassführungselement (140b) gebildeten Gasauslassströmungspfades (141) vom Durchgangsloch der ersten Halterung (110) zum Durchgangsloch der zweiten Halterung (120) kon&nuierlich oder allmählich verringert.

4. Batteriemodul (200) nach Anspruch 2, wobei der Gasauslassströmungspfad (141) eine kegelstumpfförmige Gestalt aufweist, bei der eine an einer Innenwand (144) des Gasauslassströmungspfades (141) ausgebildete geneigte Fläche konkav oder konvex gekrümmt ist, während sich die Querschnittsfläche des Gasauslassströmungspfades (141) kon&nuierlich verringert.

5. Batteriemodul (200) nach Anspruch 4, wobei ein gerader Strömungspfad (146) mit einer konstanten Querschnittsfläche auf einer Auslassseite des Gasauslassströmungspfades (141) ausgebildet ist, um dem kegelstumpfförmigen Strömungspfad zu folgen.

6. Batteriemodul (200) nach Anspruch 2, wobei in dem Gasauslassströmungspfad (141) ein kegelstumpfförmiger Strömungspfad (144A), in dem eine an einer Innenwand des Gasauslassströmungspfades ausgebildete geneigte Fläche konkav gekrümmt ist, und ein kegelstumpfförmiger Strömungspfad (144B), in dem eine geneigte Fläche konvex gekrümmt ist, nacheinander ausgebildet sind, während sich dessen Querschnittsfläche kon&nuierlich verringert.

7. Batteriemodul (200) nach Anspruch 2, wobei in dem Gasauslassströmungspfad (141) ein kegelstumpfförmiger Strömungspfad (144B), in dem eine an einer Innenwand des Gasauslassströmungspfades ausgebildete geneigte Fläche konvex gekrümmt ist, und ein kegelstumpfförmiger Strömungspfad (144A), in dem eine geneigte Fläche konkav gekrümmt ist, nacheinander ausgebildet sind, während sich dessen Querschnittsfläche kon&nuierlich verringert.

8. Batteriemodul (200) nach Anspruch 2, wobei ein Vorsprung mit einem Schraubengewinde, einer Prägung oder einem geradlinig geformten Profil an einer Innenwand des Gasauslassströmungspfades (141) ausgebildet ist.

9. Batteriemodul (200) nach Anspruch 2, wobei
ein Befestigungsabschnitt (145) zum Befes&gen des Auslassführungselements (140) an der ersten Halterung (110) und der zweiten Halterung (120) von einer Außenfläche des Auslassführungselements (140) vorsteht, und
ein Befes&gungsloch zur Schraubbefes&gung mit der ersten Halterung (110) und der zweiten Halterung (120) in dem Befestigungsabschnitt (145) ausgebildet ist.

10. Batteriemodul (200) nach Anspruch 2, wobei die erste Halterung (110) und die zweite Halterung (120) mittels Schraubbefes&gung an dem Auslassführungselement (140) befes&gt sind.

11. Batteriemodul (200) nach Anspruch 1, wobei die Entlü+ungsscheibe (130) enthält:
einen Scheibenaußenumfangsabschnitt (131), der an der ersten Halterung (110) und der zweiten Halterung (120) befes&gt ist; und
einen Scheibeninnenumfangsabschnitt (132), der einstückig mit dem Scheibenaußenumfangsabschnitt (131) ausgebildet ist, das erste Durchgangsloch und das zweite Durchgangsloch abschirmt und bricht, wenn der vorbes&mmte Druck angelegt wird,
wobei eine Kerbe (134) in dem Scheibeninnenumfangsabschnitt (132) ausgebildet ist, um zu brechen, wenn der vorbes&mmte Druck angelegt wird.

12. Batteriemodul (200) nach Anspruch 1, wobei die erste Seite in Kontakt mit der ersten Halterung (110) oder der zweiten Halterung (120) ist.

13. Batteriemodul (200) nach Anspruch 1, wobei die erste Halterung (110) in Kontakt mit einer Innenfläche des Modulrahmens (210) ist und die zweite Halterung (120) in Kontakt mit einer Außenfläche des Modulrahmens (210) ist.

14. Batteriemodul (200) nach Anspruch 1, ferner umfassend ein Dichtungselement, das dazu ausgelegt ist, einen Spalt zwischen dem Modulrahmen (210) und einem Außenumfang der Gasentlü+ungsvorrichtung (100) abzudichten.

## Revendications

1. Module de batterie (200) comprenant :
une pluralité de batteries secondaires ; et
un cadre de module (210) sur lequel les batteries secondaires sont montées,
dans lequel un dispositif d'évacuation de gaz (100) est fixé à un premier côté du cadre de module,
dans lequel le dispositif d'évacuation de gaz (100) comprend :
un premier support (110) ayant un premier trou traversant formé dans une partie centrale du premier support ;
un second support (120) dans lequel un second trou traversant communiquant avec le premier trou traversant est formé dans une partie centrale du second support (120) et qui est fixé au premier support (110) ; et
un disque d'évent (130) qui est fixé entre le premier support (110) et le second support (120) pour protéger le premier trou traversant et le second trou traversant et est configuré pour se rompre lorsqu'une pression prédéterminée est appliquée,
dans lequel un trajet d'écoulement de décharge de gaz est formé dans le premier trou traversant et le second trou traversant, et
dans lequel une section transversale du trajet d'écoulement de décharge de gaz est réduite de manière continue ou progressive depuis le trou traversant du premier support (110) jusqu'au trou traversant du second support (120),
dans lequel le trajet d'écoulement de décharge de gaz (141) a une forme tronconique dans laquelle une surface inclinée formée sur une paroi intérieure de celui-ci est incurvée de manière concave ou convexe.

2. Module de batterie (200) selon la revendication 1, dans lequel le dispositif d'évacuation de gaz (100) comprend en outre un élément de guidage de décharge (140) qui est inséré dans les trous traversants du premier support (110) et du second support (120) et a un trajet d'écoulement de décharge de gaz (141) formé dans une partie centrale de l'élément de guidage de décharge (140),
dans lequel une section transversale du trajet d'écoulement de décharge de gaz (141) est réduite de manière continue ou progressive depuis le trou traversant du premier support (110) jusqu'au trou traversant du second support (120).

3. Module de batterie (200) selon la revendication 2, dans lequel l'élément de guidage de décharge (140) inclut :
un premier élément de guidage de décharge (140a) inséré dans le premier trou traversant formé dans le premier support (110) ; et
un second élément de guidage de décharge (140b) inséré dans le second trou traversant formé dans le second support (120),
dans lequel une section transversale du trajet d'écoulement de décharge de gaz (141) formé par le premier élément de guidage de décharge (140a) et le second élément de guidage de décharge (140b) est réduite de manière continue ou progressive depuis le trou traversant du premier support (110) jusqu'au trou traversant du second support (120).

4. Module de batterie (200) selon la revendication 2, dans lequel le trajet d'écoulement de décharge de gaz (141) a une forme tronconique dans laquelle une surface inclinée formée sur une paroi intérieure (144) du trajet d'écoulement de décharge de gaz (141) est incurvée de manière concave ou convexe, à mesure que la section transversale du trajet d'écoulement de décharge de gaz (141) est réduite de manière continue.

5. Module de batterie (200) selon la revendication 4, dans lequel un trajet d'écoulement droit (146) ayant une section transversale constante est formé sur un côté sortie du trajet d'écoulement de décharge de gaz (141) de manière à suivre le trajet d'écoulement de forme tronconique.

6. Module de batterie (200) selon la revendication 2, dans lequel, dans le trajet d'écoulement de décharge de gaz (141), un trajet d'écoulement de forme tronconique (144A), dans lequel une surface inclinée formée sur une paroi intérieure du trajet d'écoulement de décharge de gaz est incurvée de manière concave, et un trajet d'écoulement de forme tronconique (144B), dans lequel une surface inclinée est incurvée de manière convexe, sont formés consécutivement, à mesure que la section transversale de celui-ci est réduite de manière continue.

7. Module de batterie (200) selon la revendication 2, dans lequel, dans le trajet d'écoulement de décharge de gaz (141), un trajet d'écoulement de forme tronconique (144B), dans lequel une surface inclinée formée sur une paroi intérieure du trajet d'écoulement de décharge de gaz est incurvée de manière convexe, et un trajet d'écoulement de forme tronconique (144A), dans lequel une surface inclinée est incurvée de manière concave, sont formés consécutivement, à mesure que la section transversale de celui-ci est réduite de manière continue.

8. Module de batterie (200) selon la revendication 2, dans lequel une saillie ayant un filetage, un bossage ou un motif en forme de ligne droite est formée sur une paroi intérieure du trajet d'écoulement de décharge de gaz (141).

9. Module de batterie (200) selon la revendication 2, dans lequel :
une partie de fixation (145) pour fixer l'élément de guidage de décharge (140) au premier support (110) et au second support (120) fait saillie depuis une surface extérieure de l'élément de guidage de décharge (140), et
un trou de fixation pour une fixation par boulon avec le premier support (110) et le second support (120) est formé dans la partie de fixation (145).

10. Module de batterie (200) selon la revendication 2, dans lequel le premier support (110) et le second support (120) sont fixés à l'élément de guidage de décharge (140) par vissage.

11. Module de batterie (200) selon la revendication 1, dans lequel le disque d'évent (130) inclut :
une partie périphérique extérieure de disque (131) fixée au premier support (110) et au second support (120) ; et
une partie périphérique intérieure de disque (132) qui est formée d'un seul tenant avec la partie périphérique extérieure de disque (131), protège le premier trou traversant et le second trou traversant, et se rompt lorsque la pression prédéterminée est appliquée,
dans lequel une encoche (134) est formée dans la partie périphérique intérieure de disque (132) de manière à se rompre lorsque la pression prédéterminée est appliquée.

12. Module de batterie (200) selon la revendication 1, dans lequel le premier côté est en contact avec le premier support (110) ou le second support (120).

13. Module de batterie (200) selon la revendication 1, dans lequel le premier support (110) est en contact avec une surface intérieure du cadre de module (210) et le second support (120) est en contact avec une surface extérieure du cadre de module (210).

14. Module de batterie (200) selon la revendication 1, comprenant en outre un élément d'étanchéité configuré pour sceller un espace entre le cadre de module (210) et une périphérie extérieure du dispositif d'évacuation de gaz (100).
